# EUROPEAN PATENT APPLICATION

(11) **EP 1 749 788 A2**
(43) Date of publication of application: **07.02.2007**
(21) Application number: 06113829.3
(22) Date of filing: 11.05.2006
(51) Int. Cl.: B66C 19/00, B60T 13/12

(54) **Tyre wheel side braking machinery for large carrier of tyre type container crane**

(30) Priority: 05.08.2005 CN 200520044100 U
(71) Applicant: Shanghai Zhenhua Port Machinery Co., Ltd., 200125 Shanghai (CN)
(72) Inventor: Gao, Qing, 200125 Shanghai (CN); Liu, Guangyu, 200125 Shanghai (CN)
(74) Representative: Modiano, Micaela Nadia

(57) **Abstract**

The invention provides a tyre wheel side braking machinery for large carrier of tyre type container crane, wherein: the braking machinery is provided in each tyre wheel of the large carrier of the tyre type container crane; the braking machinery includes a braking disk (1) and a disk type brake (2), the braking disk (1) is mounted on the hub (3) of the wheel, and the disk type brake is installed on the bearing housing (4) of the wheel and surrounds the braking disk (1); the disk type brake (2) includes a braking cylinder and a brake block (21), the braking cylinder is connected to the drive of the brake block and to a hydraulic pressure source at the outer side through hydraulic pipes (5); and the braking disk is pressed tightly from both sides of the braking disk by the brake block (21) so that the braking of the wheel is carried out. The braking is carried out by the a tyre wheel side braking machinery for large carrier of tyre type container crane of the present invention and additionally by the braking machinery arranged at the tail side of the large carrier motor so that the shock suffered by the entire drive machinery of the large carrier is decreased significantly, therefore the life of the large carrier drive machinery, particularly, the chain in the chain type drive machinery is prolonged significantly.

## Description

### Field of invention

The invention generally relates to the loading/unloading device and transportation device for containers, more particularly, to a tyre wheel side braking machinery for the large carrier of tyre type container crane.

### Backgound of invention

The conventional braking machinery for large carrier of tyre type container crane is installed on the tail shaft of the large carrier drive motor. The entire drive system is shocked seriously when the braking is carried out for emergency stop. This is the main reason that shorten the life of entire drive system. For chain type drive system particularly, the life of the chain is about one year only.

### Summary of invention

It is an object of the invention to provide a tyre wheel side braking machinery for large carrier of tyre type container carne which can overcome the problems of the prior art.

According to one aspect of the invention, a tyre wheel side braking machinery for large carrier of tyre type container crane is provided, the braking machinery is provided in each tyre wheel of the large carrier of the tyre type container crane; the braking machinery includes a braking disk and a disk type brake, the braking disk is mounted on the hub of the wheel, and the disk type brake is installed on the bearing housing of the wheel and surrounds the braking disk; the disk type brake includes a braking cylinder and a brake block, the braking cylinder is connected to the drive of the brake block and to a hydraulic pressure source at the outer side through hydraulic pipes; and the braking disk is pressed tightly from both sides of the braking disk by the brake block so that the braking of the wheel is carried out.

The tyre wheel side braking machinery for large carrier of tyre type container crane of the present invention is arranged in each tyre wheel of the large carrier of the container crane, during the braking process of the large carrier operation machinery , most portion of the inertial energy of the crane is consumed by the wheel side braking machinery, then the braking is carried out by the braking machinery provided at tail side of the large carrier motor so that the shock suffered by the entire drive machinery of the large carrier is decreased significantly, therefore the life of the large carrier drive machinery, particularly the chain in the chain type drive machinery is prolonged significantly.

### Brief description of drawing

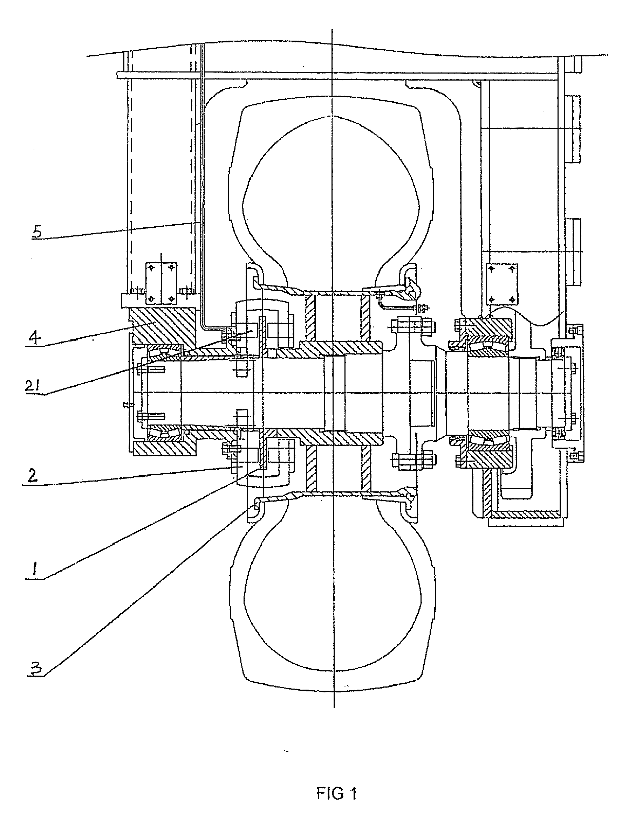

Figure 1 is the schematic structure of the tyre wheel side braking machinery for large carrier of tyre type container crane according to the invention.

### Detailed description of preferred embodiments

With reference to figure 1, the tyre wheel side braking machinery for large carrier of tyre type container crane is provided in each tyre wheel of the large carried of the tyre type container crane. The braking machinery includes the braking disk 1 and the disk type brake 2. The braking disk 1 is mounted on the hub 3 of the wheel, and the disk type brake is installed on the bearing housing 4 of the wheel and surrounds the braking disk 1. The disk type brake 2 includes the braking cylinder and the brake block 21, the braking cylinder is connected to the drive of the brake block and to a hydraulic pressure source at the outer side through the hydraulic pipe 5, and the braking disk may be pressed tightly from both sides of the braking disk by the brake block 21 so that the braking of the wheel is carried out.

The tyre wheel side braking machinery for large carrier of tyre type container crane of the invention is arranged in each tyre type wheel of the large carrier of the tyre type container came, when the stop command is carried out by the large carrier operation machinery the hydraulic system operates so that the braking cylinder is pushed and the braking disk is pressed tightly by the brake block of the wheel side brake, most portion of the inertial energy of the crane is consumed by the friction between the brake block and the braking disk, then when the operation speed of the tyre type container crane is decreased to a lower value, the braking of the crane is carried out by the brake arranged at the tail side of the large carrier motor so that the crane is stopped completely. The shock suffered by the entire drive machinery of the large carrier is significantly decreased due to the braking method so that the life of the large carrier drive machinery, particularly, the chain in the chain type drive machinery is prolonged significantly.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tyre wheel side braking machinery for large carrier of tyre type container crane, wherein:
the braking machinery is provided in each tyre wheel of the large carrier of the tyre type container crane;
the braking machinery includes a braking disk and a disk type brake, the braking disk is mounted on the hub of the wheel, and the disk type brake is installed on the bearing housing of the wheel and surrounds the braking disk;
the disk type brake includes a braking cylinder and a brake block, the braking cylinder is connected to the drive of the brake block and to a hydraulic pressure source at the outer side through hydraulic pipes; and
the braking disk is pressed tightly from both sides of the braking disk by the brake block so that the braking of the wheel is carried out.
